# EUROPÄISCHE PATENTSCHRIFT

(11) **EP 1 230 077 B1**
(45) Veröffentlichungstag und Bekanntmachung des Hinweises auf die Patenterteilung: **30.06.2004**
(21) Anmeldenummer: 00987049.4
(22) Anmeldetag: 27.10.2000
(51) Int. Cl.: B29C 45/28

(54) **STELL- UND REGELVORRICHTUNG FÜR EIN NADELELEMENT EINES HEISS- ODER KALTKANALS EINES KUNSTSTOFF-FORMWERKZEUGES**
REGULATING AND CONTROL DEVICE FOR A NEEDLE ELEMENT OF A HOT OR COLD CHANNEL OF A PLASTIC SHAPING TOOL
DISPOSITIF DE REGLAGE ET DE REGULATION DESTINE A UN POINTEAU D'UN CANAL CHAUD OU FROID D'UN OUTIL DE MOULAGE DE MATIERE PLASTIQUE

(30) Priorität: 17.11.1999 DE 19955320
(43) Veröffentlichungstag der Anmeldung: 14.08.2002
(73) Patentinhaber: Möser, Hansjürgen, 96117 Memmelsdorf-Drosendorf (DE)
(72) Erfinder: Möser, Hansjürgen, 96117 Memmelsdorf-Drosendorf (DE)
(74) Vertreter: LOUIS- PÖHLAU- LOHRENTZ
(86) Internationale Anmeldenummer: PCT/DE2000/003830
(87) Internationale Veröffentlichungsnummer: WO 2001/036174

(56) Entgegenhaltungen:
- EP-A- 0 369 509
- DE-A- 19 611 880
- DE-A- 19 857 735

## Beschreibung

Die Erfindung betrifft eine Stell- und Regelvorrichtung für ein Nadelelement eines Heiß- oder Kaltkanals eines Kunststoff-Formwerkzeuges, wobei eine Rotation einer Antriebseinrichtung mittels einer Umwandlungseinrichtung in eine axiale Bewegung des Nadelelementes transformiert wird.

Solche Stell- und Regelvorrichtungen sind beispielsweise aus der US 5 078 589 oder aus der US 5 238 378 bekannt. Die bei diesen bekannten Stell- und Regelvorrichtungen vorgesehenen Umwandlungseinrichtungen zur Umwandlung einer Rotation einer Antriebseinrichtung in eine axiale Bewegung des Nadelelementes weisen ein Schraubund Mutterelement konstanter Steigung auf. Durch die besagte konstante Steigung des Schraub- und Mutterelementes wird der Bewegungsablauf des Nadelelementes des Heiß- oder Kaltkanales des entsprechenden Kunststoff-Formwerkzeuges bestimmt.

Forderungen einer zeitgemäßen Verarbeitung der spritzgießbaren Kunststoffe mit ihren individuellen verfahrensspezifischen und physikalischen Kriterien zu den jeweiligen Kunststoff-Formteilen werden im Hinblick auf schnellstmögliche Fertigungszyklen, Schonung der Spritzgußmaterialien, d.h. spritzgießbaren Kunststoffe, Schonung der Formwerkzeuge, einer optimalen Spritzguß-Prozeßsteuerung, Nutzung motorischer Antriebseinrichtungen und Senkung des Verschleißes des jeweiligen Nadelelementes bzw. der Antriebseinrichtung mit solchen Schraub- und Mutterelementen konstanter Steigung nicht oder nur unzureichend bzw. nur mit einem entsprechenden Kompromiß erfüllt.

Kleine bzw. normale Steigungen des Schraub- und Mutterelementes besitzen zwar eine hohe Kraft sowie eine weitestgehende Selbsthemmung bei der Druckbeaufschlagung bzw. bei der Nadel-Verriegelung sowie eine feine Einstellbarkeit, sie weisen jedoch den Mangel auf, daß der jeweilige Leerhub des Nadelelementes sehr zeitintensiv ist, und daß eine eventuelle Prozeßregelung nur sehr träge, d.h. mit großem Zeitaufwand, möglich ist. Dieser Zeitaufwand ist im genannten Leerhubbereich beispielsweise zum Öffnen des Nadelelementes für einen schnellstmöglichen Massedurchfluß des Kunststofimaterials zyklusbelastend und kostentreibend, da beispielsweise Heißkanal-Nadelelemente einen Nadelhub zwischen 8 und 16 mm oder mehr besitzen können. Bei niedrigen Steigungen des Schraub- und Mutterelementes ist folglich eine reaktive schnellstmögliche Oszillation zur Prozeßregelung nicht ausreichend gegeben, so daß die Effizienz der Regelungseinrichtung, bei der es sich üblicherweise um eine elektronische Regeleinrichtung handelt, nicht bzw. nicht vollständig genutzt wird. Das jeweils gewünschte Qualitätsniveau der Produktion der jeweiligen Kunststoffteile kann folglich nicht stabil gehalten bzw. stabilisiert werden.

Bei einer größeren bzw. hohen Steigung des Schraub- und Mutterelementes der Umwandlungseinrichtung bekannter Stell- und Regelvorrichtungen für ein Nadelelement eines Heiß- oder Kaltkanales eines Kunststoff-Formwerkzeuges ist zwar eine schnelle Bewegung des Nadelelementes im Leerhubbereich realisierbar, während der Prozeßsteuerung wird das Nadelelement jedoch überaktiv, wodurch eine notwendige Feinaussteuerung erschwert wird. Außerdem resultiert aus einer solchen erhöhten bzw. hohen Steigung ein erhöhter Bedarf an Gegenhaltekrafl, was bedeutet, daß der Energie- und Leistungsaufwand entsprechend erhöht ist. Ein weiterer Mangel einer solchen erhöhten oder großen Steigung besteht darin, daß die sogenannte Eintuschierung des Nadelelementes als Verschlußelement des Angußbereichs zum Formhohlraum erheblich Werkzeug-verschleißend und relativ kraftlos ist, da die Selbsthemmung des Nadelelementes infolge der erhöhten bzw. großen Steigung von Schraub- und Mutterelementen zumindest stark reduziert ist.

Aus der DE 196 11 880 A1 ist ein Spritzgießwerkzeug mit mehreren Heißkanal-Nadelverschlußdüsen bekannt, die mit einer Betätigungsvorrichtung zum gleichzeitigen Betätigen mehrerer Nadeln verbunden sind. Bei diesem bekannten Spritzgießwerkzeug ist eine mechanische Antriebsübertragung zwischen einem Hubantrieb und bei den einzelnen Nadeln angeordneten Nadelträgerelementen vorgesehen. Zwischen den Nadelträgerelementen und der jeweiligen Nadel sind elastische Zwischenelemente vorgesehen. Quer zur Längserstreckung der Nadeln kann ein mit dem Hubantrieb verbundener Schieber als starre mechanische Antriebsübertragung vorgesehen sein. Als elastische Zwischenelemente können Druckfedern vorgesehen sein, die vorzugsweise als Tellerfedern ausgebildet sind. Der Schieber und/oder die Nadelträgerelemente können Schrägführungen zur Umsetzung der Schieber-Hubbewegung in die quer dazu verlaufende Arbeitsbewegung der Nadeln aufweisen.

Die Erfindung hat die Aufgabe, eine Stell- und Regelvorrichtung der eingangs genannten Art zu Schaffen, bei der die Öffnungs- und Schließzeiten des Nadelelementes verkürzt werden und gleichzeitig eine Feinaussteuerung möglich ist.

Diese Aufgabe wird bei einer Stell- und Regelvorrichtung der eingangs genannten Art erfindungsgemäß dadurch gelöst, daß die Umwandlungseinrichtung mindestens eine Kulissenbahn und ein an der Kulissenbahn geführtes Tastelement aufweist, wobei die mindestens eine Kulissenbahn an einer zur Nadelelement-Mittelachse konzentrischen Kulissenbahnfläche ausgebildet ist.

Die mindestens eine Kulissenbahn ist in einfacher Weise optimal auslegbar und wunschgemäß individuell gestaltbar, um die gewünschte axiale Bewegung des Nadelelementes, d.h. wunschgemäß eine schnelle Leerhubbewegung und eine im Vergleich dazu langsame Prozeßregelungs- und Abbremsbewegung des Nadelelementes zu ermöglichen. Bei dem Nadelelement kann es sich um ein Nadelelement mit einem Vollquerschnitt, um eine mit einem solchen Nadelelement kombinierte Hohlnadel beispielsweise einer Kompressionsnadeleinheit o.dgl. handeln. Solche Nadelelemente bzw. Stell- und Regelvorrichtungen für einen Heiß- oder Kaltkanal eines Kunststoff-Formwerkzeuges sind in der älteren Patentanmeldung 198 57 735 des Anmelders beschrieben. Die erfindungsgemäße Stell- und Regelvorrichtung ist beispielhaft für alle in der besagten älteren Patentanmeldung beschriebenen Nadelelemente bzw. Formwerkzeuge geeignet.

Die mindestens eine Kulissenbahn der Umwandlungseinrichtung der erfindungsgemäßen Stell- und Regelvorrichtung kann sich hierbei über einen sich um die Nadelelement-Mittelachse erstreckenden Winkel von 360 Winkelgrad oder mehr erstrecken. Vorteilhaft kann es sein, wenn zwei oder wenn mehrere Kulissenbahnen um die Nadelelement-Mittelachse herum gleichmäßig verteilt vorgesehen sind, um mit einer Drehung der Antriebseinrichtung um einen kleinen Winkel die gewünschte axiale Verstellung des Nadelelementes zu bewirken. Dieser kleine Drehwinkel ist von der Anzahl Kulissenbahnen abhängig, d.h. zur Anzahl Kulissenbahnen umgekehrt proportional. Bei zwei Kulissenbahnen kann der Drehwinkel 180 Winkelgrad oder weniger als 180 Winkelgrad betragen. Bei drei Kulissenbahnen kann der Drehwinkel 120 Winkelgrad betragen oder geringfügig kleiner sein. Die Realisierung eines möglichst kleinen Drehwinkels hängt auch vom Durchmesser der Kulissenbahnfläche für die Kulissenbahnen ab. Je größer dieser Durchmesser ist, umso größer kann die Anzahl Kulissenbahnen, d.h. umso kleiner kann der besagte Drehwinkel sein. Eine kleine Drehbewegung der Antriebseinrichtung weist den Vorteil auf, daß beispielsweise bei Anwendung eines Schneckentriebs mit einem extremen Übersetzungsverhältnis die Drehzahl der Antriebsschnecke drastisch reduziert sein kann, woraus eine entsprechende Zeitersparnis resultiert. Gleiches gilt beispielsweise auch für Ketten-, Zahnriemen- und Zahnradantriebe sowie bei Zahnstangenversionen o.dgl., wobei die Drehzahl oder der Kolbenhub drastisch reduziert werden können. Darüber hinaus können - beispielsweise bei einer Reinraumproduktion von Kunststoffgegenständen - drehmomentstarke und bei Bedarf niedrigdrehende elektrische Schritt- oder Servomotoren mit schnellsten Reaktionsmöglichkeiten zur Anwendung gelangen. Während der entsprechenden geringen Drehbewegung wird der gesamte axiale Hub des Nadelelementes, d.h. die Leerhub-Bewegung und die Prozeßregelungs- und Abbrems-Bewegung durchgeführt.

Erfindungsgemäß kann die mindestens eine Kulissenbahn in einem, die Kulissenbahnfläche aufweisenden, drehbar gelagerten Hülsenelement ausgebildet sein, das mit der Antriebseinrichtung wirkverbunden ist. Hierbei kann die mindestens eine Kulissenbahn an der die Kulissenbahnfläche bildenden Innenfläche des Hülsenelementes ausgebildet sein.

Das Hülsenelement mit der mindestens einen Kulissenbahn kann axial unbeweglich drehbar gelagert und mit einem Abtriebszahnrad ausgebildet sein, mit dem ein Antriebszahnrad kämmend in Eingriff ist. Bei dem Abtriebszahnrad kann es sich bspw. um ein Schneckenrad handeln. Beim Antriebszahnrad handelt es sich dann um eine Schneckenspindel.

Das Nadelelement kann bei einer solchen Stell- und Regelvorrichtung der oben beschriebenen Art verdrehfest vorgesehen sein und mindestens ein radial wegstehendes Tastelement aufweisen.

Eine andere Möglichkeit besteht darin, daß das Hülsenelement mit dem Nadelelement eine starre Einheit bildet und axial verstellbar und um die Nadelelement-Mittelachse drehbar und daß das mindestens eine Tastelement verdrehfest und axial unbeweglich vorgesehen ist. Bei dieser zuletzt beschriebenen Ausbildungsvariante handelt es sich gleichsam um eine Umkehrvariante der weiter oben beschriebenen Stell- und Regelvorrichtung bzw. Umwandlungseinrichtung hierfür.

Desgleichen ist es möglich, daß die mindestens eine Kulissenbahn in einem Abschnitt des Nadelelementes ausgebildet ist, das verdrehfest vorgesehen ist und daß das mindestens eine Tastelement vom drehbaren Hülsenelement wegsteht. Auch hierbei handelt es sich nur um eine Umkehrvariante des erfindungsgemäßen Prinzips der Umwandlungseinrichtung der erfindungsgemäßen Stell- und Regelvorrichtung.

Erfindungsgemäß kann das mindestens eine Tastelement von einer Walze, einer Rolle oder einem Stift gebildet sein. Um höchsten Gegendrücken bzw. -kräften verschleißfest Widerstand zu leisten, kann der mindestens eine Stift mit einer gewölbten bzw. balligen abgeflachten Gleitfläche ausgebildet sein. Durch eine solchermaßen ausgebildete Gleitfläche wird eine reduzierte Flächenpressung bewirkt, aus der eine entsprechende Verschleißreduktion resultiert.

Bei der erfindungsgemäßen Stell- und Regelvorrichtung ist es bevorzugt, wenn die mindestens eine Kulissenbahn einen Schnellverstellabschnitt großer Steigung und einen daran anschließenden Prozeßregelungs- und Abbremsabschnitt vergleichsweise kleiner Steigung aufweist. Hierfür wird ein selbständiger Patentschutz beantragt.

Bevorzugt ist es hierbei, wenn sich an den Prozeßregelungs- und Abbremsabschnitt auf der vom Schnellverstellabschnitt abgewandten Seite ein Selbstvemegelungsabschnitt anschließt. Der Selbstverriegelungsabschnitt weist vorzugsweise die Steigung Null auf

Um bei einem Übersteuern der Antriebseinrichtung zu verhindern, daß das mindestens eine Tastelement von der zugehörigen Kulissenbahn getrennt bzw. entfernt wird, ist es zweckmäßig, wenn an den Schnellverstellabschnitt auf der vom Prozeßregelungs- und Abbremsabschnitt abgewandten Seite ein Fanghakenabschnitt anschließt.

Zwischen den einzelnen Kulissenbahnabschnitten der mindestens einen Kulissenbahn ist zweckmäßigerweise jeweils ein abgerundeter Gleitkurvenabschnitt vorgesehen, um einen entsprechenden Bewegungsablauf des Tastelementes an der Kulissenbahn und folglich einen entsprechenden Bewegungsablauf des zugehörigen Nadelelementes zu erzielen.

Erfindungsgemäß kann die mindestens eine Kulissenbahn mit zueinander parallelen Kulissenbahnflächen ausgebildet sein. Bei einer derartigen Ausbildung können an der zur Nadelelement-Mittelachse konzentrischen Kulissenbahnfläche mindestens zwei schlitzförmige Kulissenbahnen in Umfangsrichtung der Kulissenbahnfläche äquidistant beabstandet vorgesehen sein. Dabei können die mindestens zwei schlitzförmigen Kulissenbahnen in Umfangsrichtung der Kulissenbahnfläche voneinander getrennt, vorgesehen sein. Es ist jedoch auch möglich, daß die mindestens zwei schlitzförmigen Kulissenbahnen miteinander jeweils mittels eines Nadelrückstellabschnittes verbunden sind. Im zuerst genannten Falle mit voneinander getrennten schlitzförmigen Kulissenbahnen ist es erforderlich, die Antriebseinrichtung hin- und hergehend anzutreiben, um das Nadelelement vor und zurück zu verstellen, während es bei der Ausbildung, bei welcher die schlitzförmigen Kulissenbahnen miteinander jeweils mittels eines Nadelrückstellabschnittes verbunden sind, möglich ist, die Antriebseinrichtung nur in eine Richtung zu drehen und hierbei aufeinanderfolgend die Verschluß- und Öffnungsbewegung des Nadelelementes zu bewirken.

Ein Vorteil der erfindungsgemäßen Ausbildung der Stell- und Regelvorrichtung mit mindestens zwei schlitzförmigen Kulissenbahnen, die miteinander mittels jeweils eines Nadelrückstellabschnittes verbunden sind, d.h. die in sich geschlossen um die Kulissenbahnfläche umlaufen, besteht darin, daß der Nadelrückstellabschnitt eine Steigung aufweisen kann, die größer sein kann als die Steigung des Schnellverstellabschnittes, so daß bei einer konstanten Antriebs- bzw. Winkelgeschwindigkeit der Antriebseinrichtung die Nadelrückstellung noch schneller erfolgt als die Schnellverstellung, d.h. die Schnellzustellung des Nadelelementes, an die sich die Prozeßregelungs- und die Abbremsbewegung des Nadelelementes anschließt.

Eine andere Möglichkeit der Ausbildung der erfindungsgemäßen Stell- und Regelvorrichtung besteht darin, daß die mindestens eine Kulissenbahn zwei Kulissenflachen aufweist, die sich an der Kulissenbahnfläche diametral und außerdem auch axial gegenüberliegen und die zueinander parallelverlaufend ausgebildet sind, wobei an jeder der beiden Kulissenflächen ein zugehöriger Abschnitt des Tastelementes geführt anliegt. Auch bei dieser Ausbildung der erfindungsgemäßen Stell- und Regelvorrichtung sind mehr als eine Kulissenbahn mit jeweils zwei diametral und axial gegenüberliegenden Kulissenflächen realisierbar, die zueinander parallelverlaufend ausgebildet sind, wobei an jeder der sich paarweise diametral und axial gegenüberliegenden Kulissenflächen ein Abschnitt des zugehörigen Tastelementes geführt anliegt. Diese sich diametral und axial gegenüberliegenden Kulissenflächen der mindestens einen Kulissenbahn sind jeweils von der einen oder der anderen Seite axial zugänglich, so daß sich also jeweils -im Gegensatz zu den oben beschriebenen schlitzförmigen Kulissenbahnen- offene Kulissenbahnen ergeben. Das kann unter Herstellungsgesichtspunkten zweckmäßig sein.

Eine weiter vereinfachte, d.h. noch einfacher herstellbare Variante der erfindungsgemäßen Stell- und Regelvorrichtung ist dadurch gekennzeichnet, daß die mindestens eine Kulissenbahn eine einzige Kulissenfläche aufweist, gegen die das zugehörige Tastelement bzw. der zugehörige Tastelement-Abschnitt mittels einer Federeinrichtung gezwängt ist. Hierbei können an der zur Nadelelement-Mittelachse konzentrischen Kulissenbahnfläche mindestens zwei Kulissenbahnen voneinander in Umfangsrichtung getrennt vorgesehen sein, die jeweils eine einzige Kulissenfläche aufweisen. Bei dieser Ausbildung ist es erforderlich, die Antriebseinrichtung hin- und hergehend anzutreiben, um das Nadelelement vor- und zurückzubewegen.

Es ist jedoch auch möglich, daß die Kulissenflächen der mindestens zwei Kulissenbahnen der zuletzt beschriebenen Variante miteinander jeweils mittels eines Nadelrückstellabschnittes verbunden sind, so daß sich eine in sich geschlossene, um die Kulissenbahnfläche umlaufende Kulissenbahn ergibt. Bei dieser Ausbildung ist es möglich, die Antriebseinrichtung nur in einer Drehrichtung anzutreiben und hierbei das Nadelelement axial hin- und herzuverstellen. Um auch bei einer solchen Ausbildung der zuletzt genannten Art bei konstanter Drehzahl der Antriebseinrichtung die Nadelrückstellung mit einer größeren Geschwindigkeit zu bewirken als die Schnellverstellung des Nadelelementes, kann der Nadelrückstellabschnitt eine Steigung aufweisen, die größer ist als die Steigung des Schnellverstellabschnittes.

Auch bei der zuletzt beschriebenen Ausbildung der erfindungsgemäßen Stell- und Regelvorrichtung mit mindestens einer Kulissenbahn, die eine einzige Kulissenfläche aufweist, gegen die das Tastelement mittels einer Federeinrichtung gezwängt ist, handelt es sich also im Unterschied zu einer schlitzförmigen Kulissenbahn um eine offene Kulissenbahn, die auf einfache Weise präzise herstellbar ist.

Weitere Einzelheiten ergeben sich aus der nachfolgenden Beschreibung von in der Zeichnung dargestellten Ausbildungen der erfindungsgemäßen Stell- und Regelvorrichtung für ein Nadelelement eines Heiß- oder Kaltkanals eines Kunststoff-Formwerkzeugs. Es zeigen:
- Figur 1: eine erste Ausführungsform der Stell- und Regelvorrichtung abschnittweise in einer Schnittdarstellung, wobei das Nadelelement die Schließstellung einnimmt,
- Figur 2: die Stell- und Regelvorrichtung gemäß Figur 1, wobei das Nadelelement sich in der Öffnungsstellung befindet,
- Figur 3: schematisch eine Abwicklung entlang der Schnittlinie Aw-Aw in Figur 1 zur Verdeutlichung des zwei sich diametral gegenüberliegende, schlitzförmige Kulissenbahnen aufweisenden Hülsenelementes der Umwandlungseinrichtung der Stell- und Regelvorrichtung für das Nadelelement gemäß den Figuren 1 und 2
- Figur 4: einen Schnitt entlang der Schnittlinie IV-IV in Figur 2 zur Verdeutlichung der verdrehfesten Anordnung des axial verstellbaren Nadelelementes,
- Figur 5: eine andere Ausbildung der Umwandlungseinrichtung der Stell- und Regelvorrichtung für ein Nadelelement eines Heiß- oder Kaltkanals eines Kunststoff-Formwerkzeuges mit drehbarem und axial verstellbarem Hülsenelement,
- Figur 6: eine der Figur 3 ähnliche Darstellung eines Abschnittes der schlitzförmigen Kulissenbahnen mit einem Tastelement, das als Stift mit abgeflachter Gleitfläche ausgebildet ist,
- Figur 7: in einer der Figur 4 ähnlichen Darstellung eine Abwicklung entlang der Schnittlinie Aw-Aw in Figur 1 zur Verdeutlichung einer Ausbildung der Stell- und Regelvorrichtung, wobei die schlitzförmigen Kulissenbahnen der Umwandlungseinrichtung zur Umwandlung einer Rotation der Antriebseinrichtung in eine axiale Bewegung des Nadelelementes miteinander jeweils mittels eines Nadelrücksteilabschnittes verbunden sind, so daß die Kulissenbahnen in Umfangsrichtung der zur Nadelelement-Mittelachse konzentrischen Kulissenbahnfläche in sich geschlossen sind,
- Figur 8: eine der Figur 5 ähnliche Schnittdarstellung noch einer anderen Ausbildung der Umwandlungseinrichtung der Stell- und Regelvorrichtung für ein Nadelelement eines Heiß- oder Kaltkanals eines Kunststoff-Formwerkzeuges mit einem drehbar gelagerten und axial unbeweglichen Hülsenelement und einem axial verstellbaren und gegen Verdrehung gesicherten Nadelelement,
- Figur 9: einen Schnitt entlang der Schnittlinie Aw1-Aw1 gemäß Figur 8 als Abwicklung ähnlich den in den Figuren 3 und 7 gezeichneten Abwicklungen,
- Figur 10: eine den Figuren 5 und 8 ähnliche Schnittdarstellung einer weiteren Ausführungsform der Umwandlungseinrichtung der Stell- und Regelvorrichtung für ein Nadelelement eines Heiß- oder Kaltkanals eines Kunststoff-Formwerkzeuges, wobei das Hülsenelement mit zwei sich diametral gegenüberliegenden Kulissenbahnen ausgebildet ist, die jeweils eine einzige offene Kulissenfläche aufweisen, und das Tastelement mittels einer Federeinrichtung gegen die besagten Kulissenflächen gezwängt ist, und
- Figur 11: eine Abwicklung ähnlich den Abwicklungen gemäß den Figuren 3, 7 und 9 entlang der Schnittlinie Aw2-Aw2 in Figur 10 zur Verdeutlichung der beiden sich diametral gegenüberliegenden Kulissenbahnen mit der jeweils einen offenen Kulissenfläche.

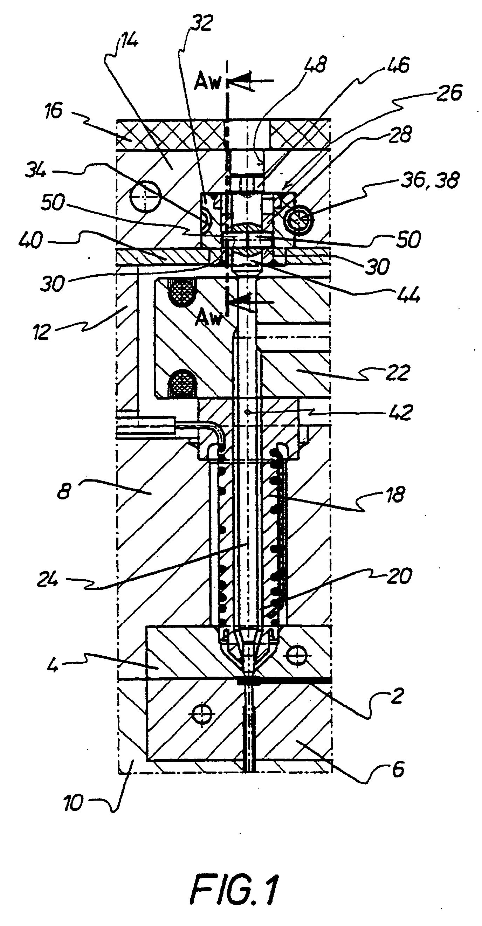

Figur 1 zeigt ein Spritzgußteil 2 zwischen zwei Formsätzen 4 und 6, die zwischen zwei Formplatten 8 und 10 eingespannt und fixiert sind. Gegen die Formplatte 8 ist eine Distanzplatte 12 gezwängt, die an einer Aufspannplatte 14 anliegt. Die Aufspannplatte 14 ist durch eine Isolierplatte 16 bedeckt, die zur Wärmeisolation dient.

Dem Formeinsatz 4 ist eine Heißkanal-Düse 18 zugeordnet, die einen Heißkanal 20 aufweist. Die Heißkanal-Düse 18 ist an einem Heißkanal-Verteilerblock 22 vorgesehen.

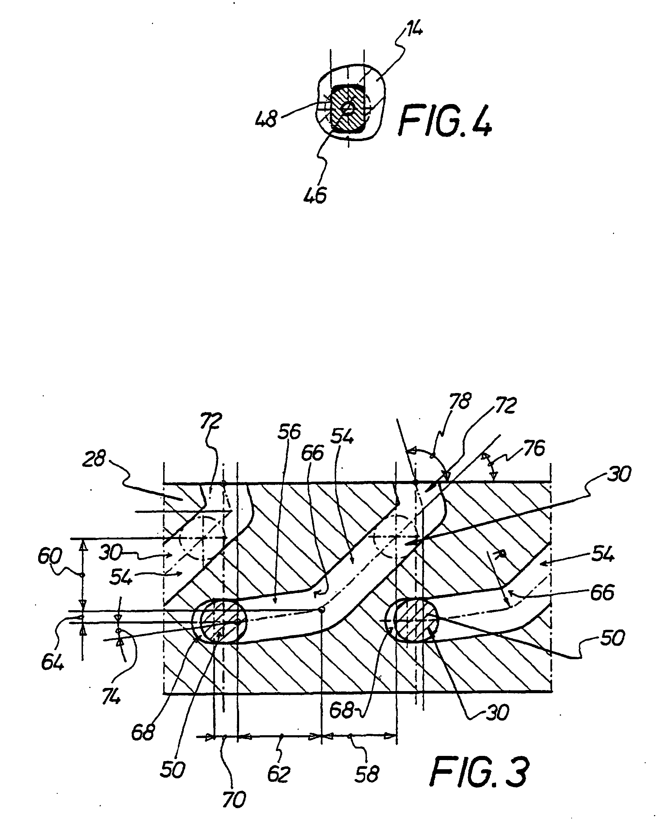

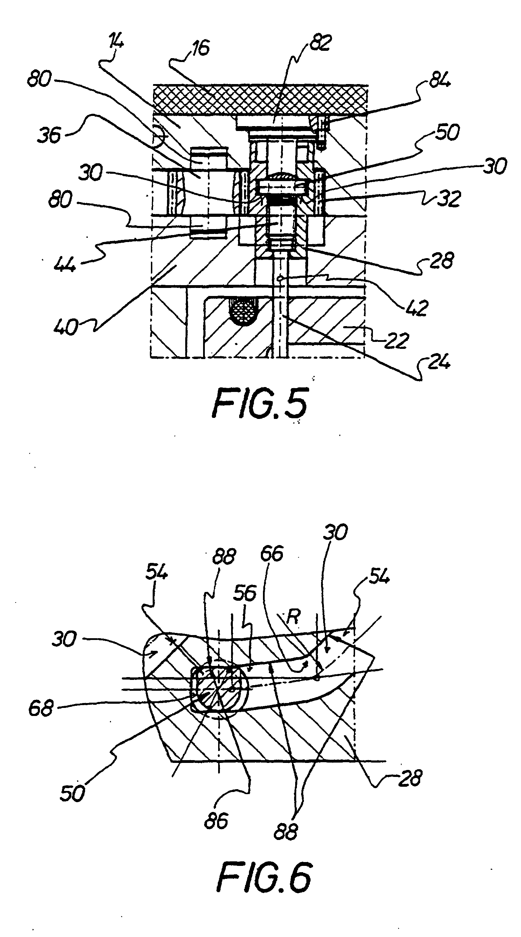

Im Heißkanal 20 ist ein Nadelelement 24 angeordnet, das zur Umwandlung einer Rotation einer (nicht gezeichneten) Antriebseinrichtung in eine axiale Bewegung des Nadelelementes 24 mit einer Umwandlungseinrichtung 26 wirkverbunden ist. Die Umwandlungseinrichtung 26 weist ein Hülsenelement 28 auf, das mit zwei sich diametral gegenüberliegenden schlitzförmigen Kulissenbahnen 30 ausgebildet ist, die weiter unten insbesondere in Verbindung mit Figur 3 sowie in Verbindung mit Figur 6 beschrieben werden. Das Hülsenelement 28 der Umwandlungseinrichtung 26 ist mit einem Abtriebszahnrad 32 fest verbunden, das als Schneckenzahnradkranz 34 ausgebildet ist. Mit dem Schneckenzahnradkranz 34 des Abtriebszahnrades 32 kämmt eine ein Antriebszahnrad 36 bildende Schneckenspindel 38. Die Schneckenspindel 38 ist mit der weiter oben erwähnten, nicht dargestellten, Antriebseinrichtung verdrehfest verbunden. Bei dieser Antriebseinrichtung handelt es sich beispielsweise um einen Elektromotor bzw. um einen elektrischen Schritt- oder Servomotor. Die Antriebseinrichtung kann auch von einem Hydraulik- oder Pneumatikmotor o.dgl. gebildet sein.

Das mit den schlitzförmigen Kulissenbahnen 30 ausgebildete Hülsenelement 28 bildet mit dem Abtriebszahnrad 32 eine Einheit und ist in der Aufspannplatte 14 drehbar und axial unbeweglich gelagert. Dazu dient ein Halte- und Zentrierelement 40, das zwischen der Aufspannplatte 14 und der Distanzplatte 12 vorgesehen ist. Das Halteund Zentrierelement 40 unterstützt außerdem die Drehlagerung des Abtriebszahnrades 32 und somit des Hülsenelementes 28, die zur Nadelelement-Mittelachse 42 konzentrisch vorgesehen sind.

Zur verdrehfesten und axial verstellbaren Ausbildung des Nadelelementes 24 weist dieses am oberseitigen Ende eines Abschnittes 44 vergrößerten Querschnitts ein Verdrehsicherungselement 46 auf. Das Verdrehsicherungselement 46 ist - wie aus Figur 4 ersichtlich ist - mit einem von der Kreisform abweichenden Querschnitt ausgebildet. Die Aufspannplatte 14 ist mit einem Durchgangsloch 48 ausgebildet, dessen lichter Querschnitt an den Querschnitt des Verdrehsicherungselementes 46 angepaßt ist, so daß das Nadelelement 24 an einer Drehung um die Nadelelement-Mittelachse 42 gehindert wird.

Vom Abschnitt 44 vergrößerten Querschnittes des Nadelelementes 24 stehen diametral in entgegengesetzte Richtungen zwei Tastelemente 50 weg, die als Walzen oder Rollen ausgebildet sind. Die Tastelemente 50 stehen in die schlitzförmigen Kulissenbahnen 30 des Hülsenelementes 28 der Umwandlungseinrichtung 26 hinein.

Die Funktionsweise der Tastelemente 50 bzw. der schlitzförmigen Kulissenbahnen 30 des Hülsenelementes 28 der Umwandlungseinrichtung 26, d.h. der Bewegungsablauf des Nadelelementes 24 wird weiter unten insbesondere in Verbindung mit Figur 3 erläutert.

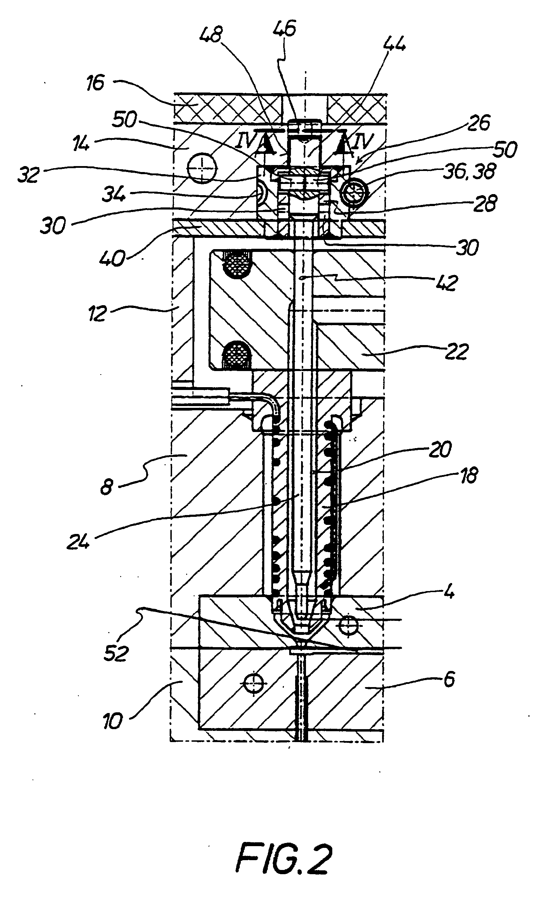

In Figur 1 nimmt das Hülsenelement 28 eine derartige Drehstellung ein, daß sich das Nadelelement 24 in seiner Verschlußstellung befindet. Demgegenüber verdeutlicht die Figur 2 eine Drehwinkelstellung des Hülsenelementes 28 der Umwandlungseinrichtung 26, bei welcher das Nadelelement 24 der Heißkanal-Düse 18 seine Öffnungsstellung einnimmt, um zwischen dem Heißkanal 20 und dem zwischen den beiden Formeinsätzen 4 und 6 ausgebildeten Formhohlraum 52 für das Spritzgußteil (sh. Figur 1) eine fluidische Verbindung zu bilden.

Gleiche Einzelheiten sind in Figur 2 mit denselben Bezugsziffern wie in Figur 1 bezeichnet, so daß es sich erübrigt, in Verbindung mit Figur 2 alle diese Einzelheiten noch einmal detalliert zu beschreiben. Selbstverständlich sind auch andere Ausbildungen und/oder Kombinationen von Heißkanal-Düsen 18 mit Kunststoff-Formwerkzeugen denkbar und möglich, als die in den Figuren 1 und 2 zeichnerisch dargestellte Ausführungsform. Diesbezüglich wird beispielhaft auf die bereits eingangs erwähnte ältere Patentanmeldung 198 57 735 des Anmelders hingewiesen.

Figur 3 verdeutlicht schematisch in einer Abwicklung das Hülsenelement 28 (sh. die Figuren 1 und 2). Das Hülsenelement 28 weist zwei sich diametral gegenüberliegende schlitzförmige Kulissenbahnen 30 auf. Jede der beiden Kulissenbahnen 30 weist einen Schnellverstellabschnitt 54 großer Steigung und einen daran anschließenden Prozeßregelungs- und Abbremsabschnitt 56 vergleichsweise kleiner Steigung auf. Der Schnellverstellabschnitt 54 der jeweiligen schlitzförmigen Kulissenbahn 30 ist in Umfangsrichtung des Hülsenelementes 28 durch einen Beschleunigungs-Rotationsabschnitt 58 bestimmt, dem in axialer Richtung der Beschleunigungs-Nadelhub 60 entspricht. Entlang dieses Beschleunigungs-Nadelhubes 60 erfolgt in vorteilhafter Weise ein schneller Leerhub des Nadelelementes 24, wenn das Hülsenelement 28 um die Nadelelement-Mittelachse 42 gedreht wird. Dabei führt das Hülsenelement 28 also nur eine Drehbewegung um einen Drehwinkel entsprechend dem Beschleunigungs-Rotationsabschnitt 58 durch, der kleiner als 180 Winkelgrad ist.

Der Prozeßregelungs-und Abbremsabschnitt 56 der jeweiligen schlitzförmigen Kulissenbahn 30 ist in Umfangsrichtung des Hülsenelementes 28 durch einen Prozeßregelungs-Rotationsabschnitt 62 bestimmt. Dem Prozeßregelungs-Rotationsabschnitt 62 ist ein im Vergleich zum Beschleunigungs-Nadelhub 60 kleiner axialer Prozeßregelungs- und Abbrems-Nadelhub 64 zugeordnet.

Der Übergang zwischen dem Schnellverstellabschnitt 54 und dem Prozeßregelungs-und Abbremsabschnitt 56 der jeweiligen schlitzförmigen Kulissenbahn 30 ist als abgerundeter Gleitkurvenabschnitt 66 ausgebildet, dessen Krümmungsradius in Figur 3 mit R bezeichnet ist.

An den Prozeßregelungs- und Abbremsabschnitt 56 der jeweiligen schlitzförmigen Kulissenbahn 30 schließt sich auf der vom Schnellverstellabschnitt 54 abgewandten Seite ein Selbstverriegelungsabschnitt 68 an, der die Steigung Null besitzt. Der Selbstverriegelungsabschnitt 68 der jeweiligen schlitzförmigen Kulissenbahn 30 weist in Umfangsrichtung einen kurzen Verriegelungs-Rotationsabschnitt 70 auf.

An den Schnellverstellabschnitt 54 jeder schlitzförmigen Kulissenbahn 30 schließt auf der vom Prozeßregelungs- und Abbremsabschnitt 56 abgewandten Seite ein Fanghakenabschnitt 72 an, durch welchen verhindert wird, daß bei einer ungewollten Übersteuerung der Antriebseinrichtung das Tastelement 50 sich aus der zugehörigen schlitzförmigen Kulissenbahn 30 herausbewegt. Eine Trennung des Nadelelementes 24 vom Hülsenelement 28 der Umwandlungseinrichtung 26 wird also mit Hilfe der Fanghakenabschnitte 72 verhindert.

Der Steigungswinkel des Prozeßregelungs- und Abbremsabschnittes 56 ist in Figur 3 durch den bogenförmigen Pfeil 74, der Steigungswinkel des Schnellverstellabschnittes 54 ist durch den bogenförmigen Doppelpfeil 76 und der Steigungswinkel des Fanghakenabschnittes 72 ist durch den bogenförmigen Doppelpfeil 78 verdeutlicht. Die Steigungswinkel 74 und 76 sind kleiner als 90 Winkelgrad. Der Steigungswinkel 78 des Fanghakenabschnittes 72 ist größer als 90 Winkelgrad, um einen Fanghaken zu bilden.

Während der Schnellverstellabschnitt 54 großen Steigungswinkels 76 bei einer Drehung des Hülsenelementes 28 also eine schnelle Leerhub-Verstellung des Nadelelementes 24 ermöglicht, ist der Steigungswinkel 74 des Prozeßregelungs- und Abbremsabschnittes 56 der jeweiligen schlitzförmigen Kulissenbahn 30 derartig dimensioniert, daß sich beim Antriebsstillstand eine Selbsthemmung bzw. während der Prozeßregelung eine ausgewogene Empfindlichkeit und Reaktivität des Nadelelementes 24 ergibt.

Figur 5 zeigt in einer den Figuren 1 und 2 ähnlichen Schnittdarstellung einen Abschnitt eines Nadelelementes 24, das sich durch einen Heißkanal-Verteilerblock 22 erstreckt.

Zwischen einem Halte- und Zentrierelement 40 über dem Heißkanal-Verteilerblock 22 und einer Aufspannplatte 14, die von einer Isolierplatte 16 bedeckt ist, ist ein Antriebszahnrad 36 mit seinen beiden in entgegengesetzte Richtung weisenden Achsstummeln 80 drehbar gelagert. Das mit einer nicht dargestellten Antriebseinrichtung wirkverbundene Antriebszahnrad 36 ist beispielsweise als zylindrisches Zahnritzel ausgebildet, das mit einem zylindrischen Abtriebszahnrad 32 kämmt, das ebenfalls als Zahnritzel ausgebildet ist. Das Abtriebszahnrad 32 ist integrales Bestandteil eines Hülsenelementes 28, das mit dem Nadelelement 24 fest verbunden ist. Zu diesem Zwecke ist das Hülsenelement 28 beispielsweise mit einem Innengewinde und das Nadelelement 24 an einem Abschnitt 44 vergrößerten Querschnitts mit einem daran angepaßten Außengewinde ausgebildet. Bei dieser Ausbildung gemäß Figur 5 ist das Hülsenelement 28 also mit dem Nadelelement 24 zu einer Einheit verbunden. Das Hülsenelement 28 ist in der Aufspannplatte 14 drehbar gelagert und axial, d.h. in Richtung der Nadelelement-Mittelachse 42 verstellbar. Das Hülsenelement 28 ist innenseitig mit zwei sich diametral gegenüberliegenden schlitzförmigen Kulissenbahnen 30 ausgebildet, wie sie in Figur 3 in einer Abwicklung gezeichnet und weiter oben ausführlich beschrieben worden sind. In die sich diametral gegenüberliegenden schlitzförmigen Kulissenbahnen 30 steht ein Tastelement 50 hinein, das als Stift ausgebildet ist. Das Tastelement 50 ist an einem Halteelement 82 angebracht, das zwischen der Aufspannplatte 14 und der Isolierplatte 16 axial unbeweglich festgelegt ist, und das mit Hilfe von Stiften 84 an der ortsfesten Aufspannplatte 14 gegen Verdrehungen um die Nadelelement-Mittelachse 42 gesichert ist. Bei dieser Ausbildung ist das Tastelement 50 also verdrehfest und axial unbeweglich vorgesehen.

Wird das Hülsenelement 28 mit seinem Abtriebszahnrad 32 mittels des Antriebszahnrades 36 drehend angetrieben, so ergibt sich durch die relative Abwälzung zwischen dem orts- und verdrehfest vorgesehenen Tastelement 50 und den schlitzförmigen Kulissenbahnen 30 im Hülsenelement 28 eine Drehung des Nadelelementes 24 um seine Mittelachse 42 und simultan eine entsprechende axiale Verstellung des Nadelelementes 24, die während des Leerhubes schnell und während des Prozeßregelungs- und Abbremshubes langsam und exakt erfolgt.

Die Figur 6 zeigt abschnittweise eine Abwicklung des Hülsenelementes 28 mit zwei schlitzförmigen Kulissenbahnen 30 bzw. deren Schnellverstellabschnitt 54 und den daran anschließenden Prozeßregelungs- und Abbremsabschnitt 56 sowie den zwischen diesen beiden Abschnitten 54 und 56 befindlichen abgerundeten Gleitkurvenabschnitt 66 mit dem Krümmungsradius R und dem Selbstverriegelungsabschnitt 68 mit der Steigung Null.

Um die Flächenpressung zwischen dem Tastelement 50 und den schlitzförmigen Kulissenbahnen 30 minimal zu halten, ist bei dieser Ausbildung das als Stift ausgebildete Tastelement 50 mit einer abgeflachten Gleitfläche 86 ausgebildet. Die Gleitfläche 86 kann gekrümmt oder ebenflächig gestaltet sein. Die Gleitfläche 86 gleitet an den mit den höchsten Gegendruckkräften belasteten Steuerkurvenflächen 88 entlang, wobei durch die vergrößerte Gleitfläche 86 die Flächenpressung zwischen dem Tastelement 50 und den schlitzförmigen Kulissenbahnen 30 entlang des Prozeßregelungs.- und Abbremsabschnittes 56 und des Selbstverriegelungsabschnittes 68 reduziert wird. Daraus resultiert eine höhere Belastbarkeit bzw. Verschleißfestigkeit. Damit die Anpassung der Gleitfläche 86 an die Steuerkurvenflächen 88 optimal ist, kann das Tastelement 50 zylindrisch, d.h. mit einem kreisrunden Querschnitt im Halteelement 82 gelagert sein, wobei eine Rotationsanpassung an die Steuerkurvenflächen 88 der Kulissenbahnen 30 gegeben ist.

Zur Leistungssteigerung der einzelnen Komponenten können diese gehärtet oder zur Härtung beschichtet sein.

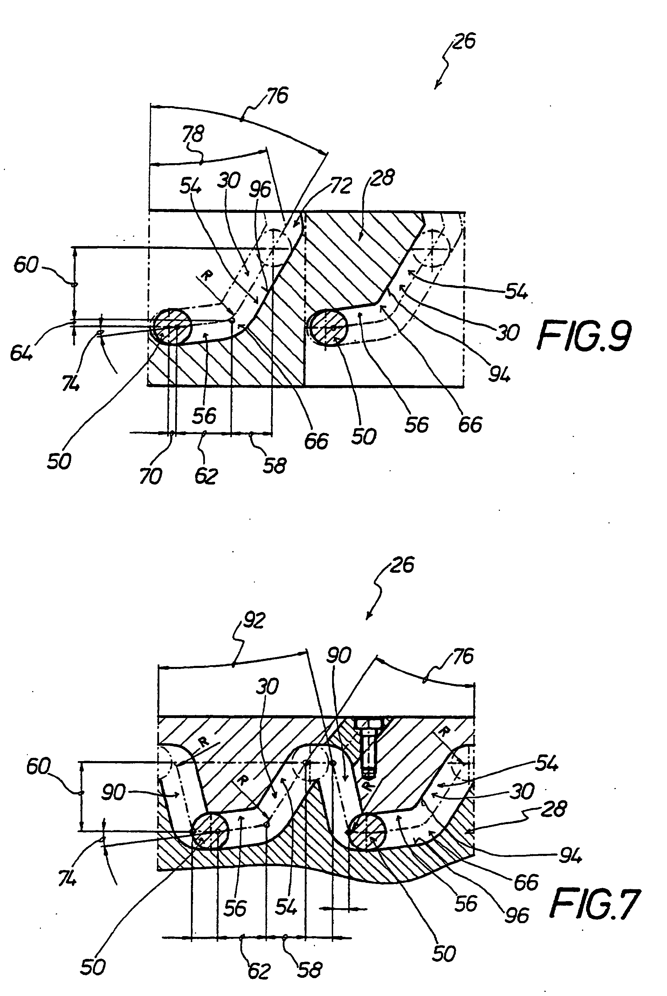

Figur 7 zeigt in einer der Figur 3 ähnlichen Abwicklung das Hülsenelement 28 mit zwei sich diametral gegenüberliegenden schlitzförmigen Kulissenbahnen 30, von welchen jede einen Schnellverstellabschnitt 54 großer Steigung und einen daran anschließenden Prozeßregelungs- und Abbremsabschnitt 56 vergleichsweise kleiner Steigung aufweist.

Gleiche Einzelheiten sind in Figur 7 mit denselben Bezugsziffern wie in Figur 3 bezeichnet, so daß es sich erübrigt, in Verbindung mit Figur 7 alle diese Einzelheiten noch einmal detailliert zu beschreiben.

Während in Figur 3 die beiden sich diametral gegenüberliegenden schlitzförmigen Kulissenbahnen 30 voneinander in Umfangsrichtung getrennt sind, verdeutlicht die Figur 7 eine Ausbildung, bei welcher die schlitzförmigen Kulissenbahnen 30 miteinander jeweils mittels eines Nadelrückstellabschnittes 90 verbunden sind, so daß sich um die zur Nadelelement-Mittelachse konzentrische Kulissenbahnfläche eine in sich geschlossene Kulissenbahn ergibt. Der jeweilige Nadelrückstellabschnitt 90 weist eine durch den bogenförmigen Pfeil 92 angedeutete Steigung auf, deren Steigungswinkel größer ist als der durch den bogenförmigen Pfeil 76 verdeutlichte Steigungswinkel des jeweiligen Schnellverstellabschnittes 54. Hierdurch wird bewirkt, daß bei einer schrittweisen Drehung der Antriebseinrichtung, d.h. des Hülsenelementes 28 in einer einzigen Drehrichtung, die Rückstellung des Nadelelementes 24 (sh. die Figuren 1 oder 2) schneller erfolgt als die Schnellverstellung des Nadelelementes in Richtung zum Formhohlraum 52 hin.

Der Steigungswinkel 92 des jeweiligen Nadelrückstellabschnittes 90 muß selbstverständlich nicht größer sein als der Steigungswinkel 76 des jeweiligen Schnellverstellabschnittes 54.

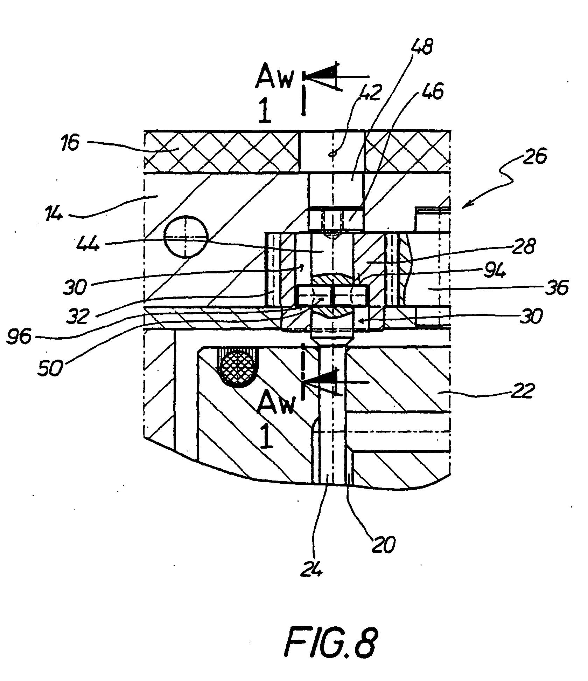

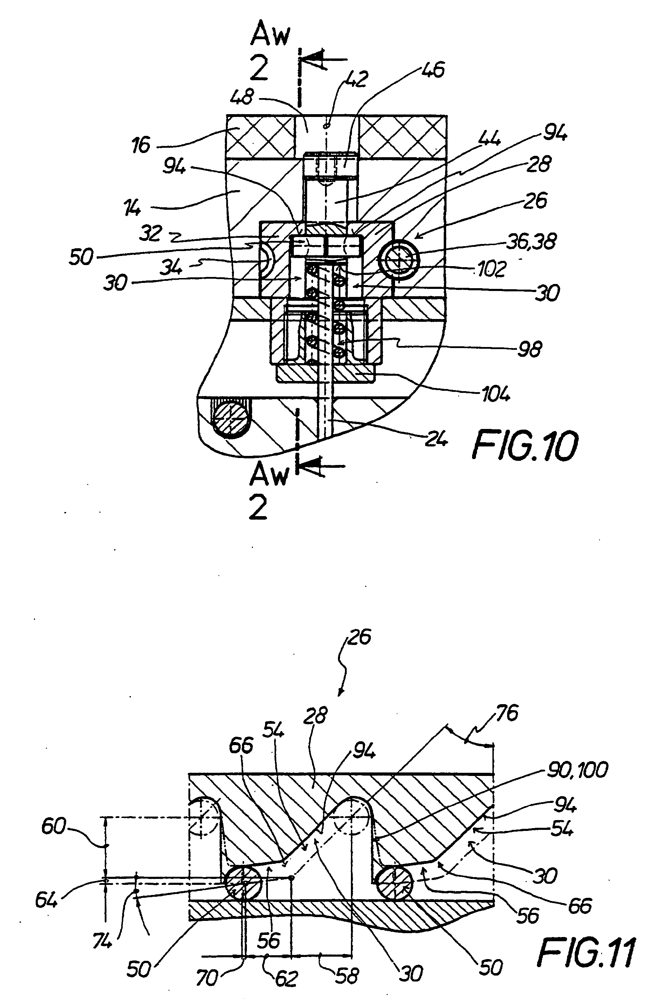

Die Figuren 8 und 9 verdeutlichen eine Ausführungsform der Umwandlungseinrichtung 26 für ein Nadelelement 24, wobei das Hülsenelement 28 der Umwandlungseinrichtung 26 eine Kulissenbahn 30 mit zwei Kulissenflächen 94 und 96 aufweist, die sich an der zur Nadelelement-Mittelachse 42 konzentrische Kulissenbahnfläche diametral und axial gegenüberliegen und die zueinander parallelverlaufend ausgebildet sind, wobei an jeder der beiden sich axial gegenüberliegenden Kulissenflächen 94 und 96 ein zugehöriger Abschnitt des Tastelementes 50 anliegt. Hierbei handelt es sich also nicht um eine schlitzförmige Kulissenbahn sondern um eine jeweils einseitig offene Kulissenbahn. Gleiche Einzelheiten sind auch in Figur 9 mit denselben Bezugsziffern wie in den Figuren 3 und 7 bezeichnet, so daß es sich erübrigt, in Verbindung mit Figur 9 alle diese Einzelheiten noch einmal zu beschreiben. Entsprechendes gilt für Figur 8, in der gleiche Einzelheiten wie in den Figuren 1, 2 und 5 mit denselben Bezugsziffern wie dort bezeichnet sind, so daß es sich erübrigt, in Verbindung mit Figur 8 alle diese Einzelheiten noch einmal detailliert zu beschreiben. Aus Figur 8 ist jedoch deutlich ersichtlich, daß der auf der einen Seite radial vorstehende Abschnitt des Tastelementes 50 an der Kulissenfläche 96 und daß gleichzeitig der auf der anderen Seite diametral vorstehende Abschnitt des Tastelementes 50 an der axial gegenüberliegenden Kulissenfläche 94 eng anliegt, so daß eine Drehung des Hülsenelementes 28 in die eine oder andere Drehrichtung um die Nadeleleinent-Mittelachse 42 herum eine auf- und abgehende axiale Bewegung des gegen Verdrehung gesicherten Nadelelementes 24 ergibt.

Die Figuren 10 und 11 verdeutlichen eine Ausbildung der Umwandlungseinrichtung 26 der erfindungsgemäßen Stell- und Regelvorrichtung mit zwei sich diametral gegenüberliegenden Kulissenbahnen 30, die jeweils eine einzige Kulissenfläche 94 aufweisen. Die sich diametral gegenüberliegenden Ansätze des Tastelementes 50 werden hierbei mit Hilfe einer Federeinrichtung 98 gegen die einseitig offenen Kulissenflächen 94 der sich diametral gegenüberliegenden offenen Kulissenbahnen 30 gezwängt.

In Figur 11, in der gleiche Einzelheiten wie in den Figuren 3, 6, 7 und 9 bezeichnet sind, sind diametral gegenüberliegende Kulissenbahnen 30 dargestellt, die voneinander getrennt sind. Das heißt, hier ist es erforderlich, das Hülsenelement 28 der Umwandlungseinrichtung 26 hin- und hergehend zu drehen, um das Nadelelement 14 axial vor- und zurückzuverstellen. Selbstverständlich wäre es auch möglich, die sich diametral gegenüberliegenden, einseitig offenen Kulissenbahnen 30 miteinander - ähnlich wie bei der Ausbildung gemäß Figur 7 - in Umfangsrichtung zu verbinden. Das ist durch die doppelt strichpunktierten Linien 100 in Figur 11 schematisch angedeutet. Bei einer solchen Ausbildung des Hülsenelementes 28 mit einem durch die doppelt strichpunktierte Linie 100 angedeuteten Nadelrückstellabschnitt 90 wäre es dann möglich, das Hülsenelement 28 nur in eine Drehrichtung schrittweise anzutreiben, um das Nadelelement 14 axial oszillierend präzise vor- und zurückzubewegen.

Figur 10 zeigt das Federelement 98, das im Hülsenelement 28 zwischen der Stirnseite 102 des Abschnittes 44 vergrößerten Querschnitts des Nadelelementes 24 und einem in das Hülsenelement 28 eingeschraubten und mit diesem fest verbundenen Stopfen 104 eingespannt ist.

## Patentansprüche

1. Stell- und Regelvorrichtung für ein Nadelelement (24) eines Heiß- oder Kaltkanals (20) eines Kunststoff-Formwerkzeuges, wobei eine Rotation einer Antriebseinrichtung mittels einer Umwandlungseinrichtung (26) in eine axiale Bewegung des Nadelelementes (24) transformiert wird,
**dadurch gekennzeichnet,**
**daß** die Umwandlungseinrichtung (26) mindestens eine Kulissenbahn (30) und ein an der Kulissenbahn (30) geführtes Tastelement (50) aufweist, wobei die mindestens eine Kulissenbahn (30) an einer zur Nadelelement-Mittelachse (42) konzentrischen Kulissenbahnfläche ausgebildet ist.

2. Stell- und Regelvorrichtung nach Anspruch 1,
**dadurch gekennzeichnet,**
**daß** die mindestens eine Kulissenbahn (30) in einem, die Kulissenbahnfläche aufweisenden, drehbar gelagerten Hülsenelement (28) ausgebildet ist, das mit der Antriebseinrichtung verbunden ist.

3. Stell- und Regelvorrichtung nach Anspruch 2,
**dadurch gekennzeichnet,**
**daß** die mindestens eine Kulissenbahn (30) an der die Kulissenbahnfläche bildenden Innenfläche des Hülsenelementes (28) ausgebildet ist.

4. Stell- und Regelvorrichtung nach Anspruch 2 und 3,
**dadurch gekennzeichnet,**
**daß** das Hülsenelement (28) axial unbeweglich drehbar gelagert und mit einem Abtriebszahnrad (32) ausgebildet ist, mit dem ein Antriebszahnrad (36) kämmend in Eingriff ist.

5. Stell- und Regelvorrichtung nach einem der Ansprüche 1 bis 4,
**dadurch gekennzeichnet,**
**daß** das Nadelelement (24) verdrehfest vorgesehen ist und mindestens ein radial wegstehendes Tastelement (50) aufweist.

6. Stell- und Regelvorrichtung nach Anspruch 2 und 3,
**dadurch gekennzeichnet,**
**daß** das Hülsenelement (28) mit dem Nadelelement (24) eine Einheit bildet und axial verstellbar und um die Nadelelement-Mittelachse (42) drehbar und daß das mindestens eine Tastelement (50) verdrehfest und axial unbeweglich vorgesehen ist.

7. Stell- und Regelvorrichtung nach einem der Ansprüche 1 bis 6,
**dadurch gekennzeichnet,**
**daß** das mindestens eine Tastelement (50) von einer Walze, einer Rolle oder einem Stift gebildet ist.

8. Stell- und Regelvorrichtung nach Anspruch 7,
**dadurch gekennzeichnet,**
**daß** der mindestens eine Tastelement-Stift mit einer abgeflachten Gleitfläche (86) ausgebildet ist.

9. Stell- und Regelvorrichtung insbesondere nach einem der Ansprüche 1 bis 8,
**dadurch gekennzeichnet,**
**daß** die mindestens eine Kulissenbahn (30) einen Schnellverstellabschnitt (54) großer Steigung und einen daran anschließenden Prozeßregelungs- und Abbremsabschnitt (56) vergleichsweise kleiner Steigung aufweist.

10. Stell- und Regelungsvorrichtung nach Anspruch 9,
**dadurch gekennzeichnet,**
**daß** sich an den Prozeßregelungs- und Abbremsabschnitt (56) auf der vom Schnellverstellabschnitt (54) abgewandten Seite ein Selbstverriegelungsabschnitt (68) anschließt.

11. Stell- und Regelungsvorrichtung nach Anspruch 10,
**dadurch gekennzeichnet,**
**daß** der Selbstverriegelungsabschnitt (68) die Steigung Null aufweist.

12. Stell- und Regelvorrichtung nach Anspruch 9,
**dadurch gekennzeichnet,**
**daß** an den Schnellverstellabschnitt (54) auf der vom Prozeßregelungs- und Abbremsabschnitt (56) abgewandten Seite ein Fanghakenabschnitt (72) anschließt.

13. Stell- und Regelvorrichtung nach einem der Ansprüche 9 bis 12,
**dadurch gekennzeichnet,**
**daß** zwischen den einzelnen Kulissenbahnabschnitten (54, 56, 68) jeweils ein abgerundeter Gleitkurvenabschnitt (66) vorgesehen ist.

14. Stell- und Regelvorrichtung nach einem der Ansprüche 1 bis 13,
**dadurch gekennzeichnet,**
**daß** die mindestens eine Kulissenbahn (30) mit zueinander parallelen Kulissenflächen (94, 96) ausgebildet ist.

15. Stell- und Regelvorrichtung nach Anspruch 14,
**dadurch gekennzeichnet,**
**daß** an der zur Nadelelement-Mittelachse (42) konzentrischen Kulissenbahnfläche mindestens zwei schlitzförmige Kulissenbahnen (30) in Umfangsrichtung äquidistant beabstandet vorgesehen sind.

16. Stell- und Regelvorrichtung nach Anspruch 15,
**dadurch gekennzeichnet,**
**daß** die mindestens zwei schlitzförmigen Kulissenbahnen (30) voneinander getrennt vorgesehen sind.

17. Stell- und Regelvorrichtung nach Anspruch 15,
**dadurch gekennzeichnet,**
**daß** die mindestens zwei schlitzförmigen Kulissenbahnen (30) miteinander jeweils mittels eines Nadelrücksteilabschnittes (90) verbunden sind.

18. Stell- und Regelvorrichtung nach Anspruch 17,
**dadurch gekennzeichnet,**
**daß** der Nadelrückstellabschnitt (90) eine Steigung (92) aufweist, die größer ist als die Steigung (76) des Schnellverstellabschnittes (54).

19. Stell- und Regelvorrichtung nach einem der Ansprüche 1 bis 13,
**dadurch gekennzeichnet,**
**daß** die mindestens eine Kulissenbahn (30) zwei Kulissenflächen (94, 96) aufweist, die sich an der Kulissenbahnfläche diametral und axial gegenüberliegen und die zueinander parallelverlaufend ausgebildet sind, wobei an jeder der beiden Kulissenflächen (94, 96) ein zugehöriger Abschnitt des Tastelementes (50) geführt anliegt.

20. Stell- und Regelvorrichtung nach einem der Ansprüche 1 bis 13,
**dadurch gekennzeichnet,**
**daß** die mindestens eine Kulissenbahn (30) eine einzige Kulissenfläche (94) aufweist, gegen die das Tastelement (50) mittels einer Federeinrichtung (98) gezwängt ist.

21. Stell- und Regelvorrichtung nach Anspruch 20,
**dadurch gekennzeichnet,**
**daß** an der zur Nadelelement Mittelachse (42) konzentrischen Kulissenbahnfläche mindestens zwei Kulissenbahnen (30) voneinander getrennt vorgesehen sind, die jeweils eine einzige Kulissenfläche (94) aufweisen.

22. Stell- und Regelvorrichtung nach Anspruch 20,
**dadurch gekennzeichnet,**
**daß** die Kulissenflächen (94) der mindestens zwei Kulissenbahnen (30) miteinander jeweils mittels eines Nadelrückstellabschnittes (90) verbunden sind.

23. Stell- und Regelvorrichtung nach Anspruch 22,
**dadurch gekennzeichnet,**
**daß** der Nadelrückstellabschnitt (90) eine Steigung (92) aufweist, die größer ist als die Steigung (76) des Schnellverstellabschnittes (54).

## Claims

1. A control and regulating device for a needle element (24) of a hot or cold channel (20) of a plastic molding tool, wherein a rotary movement of a drive device is transformed by means of a converting device (26) into an axial movement of the needle element (24), **characterised in that** the converting device (26) has at least one slide path (30) and a follower element (50) guided on the slide path (30), wherein the at least one slide path (30) is provided on a slide path surface which is concentric with respect to the center line (42) of the needle element.

2. A control and regulating device as set forth in claim 1 **characterised in that** the at least one slide path (30) is provided in a rotatably supported sleeve element (28) which has the slide path surface and which is connected to the drive device.

3. A control and regulating device as set forth in claim 2 **characterised in that** the at least one slide path (30) is provided on the internal surface of the sleeve element (28), said internal surface forming the slide path surface.

4. A control and regulating device as set forth in claim 2 and claim 3 **characterised in that** the sleeve element (28) is axially immovably rotatably supported and provided with a drive output gear (32) with which a drive gear (36) is in meshing engagement.

5. A control and regulating device as set forth in one of claims 1 through 4 **characterised in that** the needle element (24) is provided non-rotatably and has at least one follower element (50) projecting radially away therefrom.

6. A control and regulating device as set forth in claim 2 or claim 3 **characterised in that** the sleeve element (28) forms a unit with the needle element (24) and is axially displaceable and rotatable about the center line (42) of the needle element and that the at least one follower element (50) is non-rotatable and axially immovable.

7. A control and regulating device as set forth in one of claims 1 through 6 **characterised in that** the at least one follower element (50) is formed by a cylinder, a roller or a pin.

8. A control and regulating device as set forth in claim 7 **characterised in that** the at least one follower element pin is provided with a flattened sliding surface (86).

9. A control and regulating device in particular as set forth in one of claims 1 through 8 **characterised in that** the at least one slide path (30) has a fast-displacement portion (54) of large pitch and an adjoining process regulation and deceleration portion (56) of comparatively small pitch.

10. A control and regulating device as set forth in claim 9 **characterised in that** adjoining the process regulation and deceleration portion (56) on the side remote from the fast-displacement portion (54) is a self-locking portion (68).

11. A control and regulating device as set forth in claim 10 **characterised in that** the self-locking portion (68) has a pitch of zero.

12. A control and regulating device as set forth in claim 9 **characterised in that** adjoining the fast-displacement portion (54) on the side remote from the process regulation and deceleration portion (56) is a catch hook portion (52).

13. A control and regulating device as set forth in one of claims 9 through 12 **characterised in that** provided between each of the individual sliding path portions (54, 56, 68) is a respective rounded sliding curve portion (66).

14. A control and regulating device as set forth in one of claims 1 through 13 **characterised in that** the at least one slide path (30) is provided with mutually parallel slide surfaces (94, 96).

15. A control and regulating device as set forth in claim 14 **characterised in that** provided at the slide path surface which is concentric with respect to the center line (42) of the needle element are at least two slot-shaped slide paths (30) equidistantly spaced in the peripheral direction.

16. A control and regulating device as set forth in claim 15 **characterised in that** the at least two slot-shaped slide paths (30) are provided separately from each other.

17. A control and regulating device as set forth in claim 15 **characterised in that** the at least two slot-shaped slide paths (30) are respectively connected together by means of a needle return portion (90).

18. A control and regulating device as set forth in claim 17 **characterised in that** the needle return portion (90) is of a pitch (92) which is greater than the pitch (76) of the fast-displacement portion (54).

19. A control and regulating device as set forth in one of claims 1 through 13 **characterised in that** the at least one slide path (30) has two slide surfaces (94, 96) which are disposed in diametrally and axially opposite relationship on the slide path surface and which are arranged in mutually parallel relationship, wherein bearing in guided relationship against each of the two slide surfaces (94, 96) is an associated portion of the follower element (50).

20. A control and regulating device as set forth in one of claims 1 through 13 **characterised in that** the at least one slide path (30) has a single slide surface (94) against which the follower element (50) is urged by means of a spring device (98).

21. A control and regulating device as set forth in claim 20 **characterised in that** at least two slide paths (30) are provided separatedly from each other on the slide path surface which is concentric with respect to the center line (42) of the needle element, the at least two slide paths (30) each having a single slide surface (94).

22. A control and regulating device as set forth in claim 20 **characterised in that** the slide surfaces (94) of the at least two slide paths (30) are respectively connected together by means of a needle return portion (90).

23. A control and regulating device as set forth in claim 22 **characterised in that** the needle return portion (90) is of a pitch (92) which is greater than the pitch (76) of the fast-displacement portion (54).

## Revendications

1. Dispositif de réglage et de régulation destiné à un pointeau (24) d'un canal chaud ou froid (20) d'un outil de moulage de matière plastique, dans lequel une rotation d'un dispositif d'entraînement est transformée en un mouvement axial du pointeau (24) au moyen d'un dispositif de transformation (26), **caractérisé en ce que** le dispositif de transformation (26) comporte au moins une voie de coulisse (30) et un élément palpeur (50) guidé sur la voie de coulisse (30), ladite voie de coulisse au moins unique (30) étant formée sur une surface de voie de coulisse concentrique à l'axe médian (42) du pointeau.

2. Dispositif de réglage et de régulation selon la revendication 1, **caractérisé en ce que** la voie de coulisse (30) au moins unique est formée dans un élément de douille (28) comportant la surface de voie de coulisse, monté de manière à pouvoir tourner et relié avec le dispositif d'entraînement.

3. Dispositif de réglage et de régulation selon la revendication 2, **caractérisé en ce que** la voie de coulisse (30) au moins unique est formée sur la surface intérieure de l'élément de douille (28) formant la surface de la voie de coulisse.

4. Dispositif de réglage et de régulation selon la revendication 2 et la revendication 3, **caractérisé en ce que** l'élément de douille (28) est monté de manière à pouvoir tourner sans déplacement dans le sens axial et est conçu avec une roue dentée de sortie (32), avec laquelle une roue dentée d'entraînement (36) est en prise en s'engrenant.

5. Dispositif de réglage et de régulation selon l'une quelconque des revendications 1 à 4, **caractérisé en ce que** le pointeau (24) est prévu résistant à la torsion et qu'il comporte au moins un élément palpeur (50) situé à l'écart dans le sens radial.

6. Dispositif de réglage et de régulation selon la revendication 2 et la revendication 3, **caractérisé en ce que** l'élément de douille (28) forme une unité avec le pointeau (24), est réglable dans le sens axial et peut tourner autour de l'axe médian (42) du pointeau et **en ce que** l'élément palpeur (50) au moins unique est prévu résistant à la torsion et non mobile dans le sens axial.

7. Dispositif de réglage et de régulation selon l'une quelconque des revendications 1 à 6, **caractérisé en ce que** l'élément palpeur (50) au moins unique est formé par un cylindre, un rouleau ou une tige.

8. Dispositif de réglage et de régulation selon la revendication 7, **caractérisé en ce que** la tige d'élément palpeur au moins unique est formée avec une surface de glissement aplatie (86).

9. Dispositif de réglage et de régulation en particulier selon l'une quelconque des revendications 1 à 8, **caractérisé en ce que** la voie de coulisse (30) au moins unique comporte un segment de réglage rapide (54) à forte pente et un segment de régulation de processus et de freinage (56) qui lui fait suite, de pente comparativement plus faible.

10. Dispositif de réglage et de régulation selon la revendication 9, **caractérisé en ce qu'**un segment de blocage automatique (68) fait suite au segment de régulation de processus et de freinage (56) du côté opposé au segment de réglage rapide (54).

11. Dispositif de réglage et de régulation selon la revendication 10, **caractérisé en ce que** le segment de blocage automatique (68) présente une pente nulle.

12. Dispositif de réglage et de régulation selon la revendication 9, **caractérisé en ce qu'**un segment à crochet d'arrêt (72) fait suite au segment de réglage rapide (54) du côté opposé au segment de régulation de processus et de freinage (56).

13. Dispositif de réglage et de régulation selon l'une quelconque des revendications 9 à 12, **caractérisé en ce qu'**il est prévu un segment en courbe de glissement (66) arrondi entre les différents segments de voie de coulisse (54, 56, 68).

14. Dispositif de réglage et de régulation selon l'une quelconque des revendications 1 à 13, **caractérisé en ce que** la voie de coulisse (30) au moins unique est formée avec des surfaces de coulisse parallèles entre elles (94, 96).

15. Dispositif de réglage et de régulation selon la revendication 14, **caractérisé en ce qu'**au moins deux voies de coulisse en forme de rainures (30) sont prévues écartées l'une de l'autre de manière équidistante dans le sens circonférentiel sur la surface de voie de coulisse concentrique à l'axe médian (42) du pointeau.

16. Dispositif de réglage et de régulation selon la revendication 15, **caractérisé en ce que** les deux voies de coulisse en forme de rainures (30) au moins sont prévues séparées l'une de l'autre.

17. Dispositif de réglage et de régulation selon la revendication 15, **caractérisé en ce que** les deux voies de coulisse (30) au moins sont reliées entre elles au moyen d'un segment de rappel du pointeau (90).

18. Dispositif de réglage et de régulation selon la revendication 17, **caractérisé en ce que** le segment de rappel du pointeau (90) comporte une pente qui est supérieure à la pente (76) du segment de réglage rapide (54).

19. Dispositif de réglage et de régulation selon l'une quelconque des revendications 1 à 13, **caractérisé en ce que** la voie de coulisse (30) au moins unique comporte deux surfaces de coulisse (94, 96) qui sont opposées diamétralement et axialement sur la surface de voie de coulisse et qui sont prévues parallèles entre elles, un segment associé de l'élément palpeur (50) reposant sur chacune des deux surfaces de coulisse (94, 96) en étant guidé.

20. Dispositif de réglage et de régulation selon l'une quelconque des revendications 1 à 13, **caractérisé en ce que** la voie de coulisse (30) au moins unique comporte une surface de coulisse unique (94) contre laquelle l'élément palpeur est serré au moyen d'un dispositif à ressort (98).

21. Dispositif de réglage et de régulation selon la revendication 20, **caractérisé en ce qu'**il est prévu, sur la surface de voie de coulisse concentrique à l'axe médian (42) du pointeau, au moins deux voies de coulisse (30) séparées l'une de l'autre et qui comportent chacune une surface de coulisse unique (94).

22. Dispositif de réglage et de régulation selon la revendication 20, **caractérisé en ce que** les surfaces de coulisse (94) des deux voies de coulisse (30) au moins sont reliées entre elles au moyen d'un segment de rappel de pointeau (90).

23. Dispositif de réglage et de régulation selon la revendication 22, **caractérisé en ce que** le segment de rappel de pointeau (90) comporte une pente qui est supérieure à la pente (76) du segment de réglage rapide (54).
